# EUROPEAN PATENT APPLICATION

(11) **EP 1 503 204 A1**
(43) Date of publication of application: **02.02.2005**
(21) Application number: 03026826.2
(22) Date of filing: 20.11.2003
(51) Int. Cl.: G01N 21/31

(54) **Detection and analysis of chemical and biological aerosols**

(30) Priority: 29.07.2003 US 628991
(71) Applicant: NORTHROP GRUMMAN CORPORATION, Los Angeles California 90067-2199 (US)
(72) Inventor: Chou, Mau-Song, Rancho Palos Verdes CA 90275 (US)
(74) Representative: Schmidt, Steffen J., Dipl.-Ing.

(57) **Abstract**

A system for detecting and analyzing chemical and biological aerosols is described. A beam of radiation (20) is used to radiate a target cloud (12) including the aerosol. The radiation energy that is absorbed by the cloud is thermalized by collisional energy transfer between the molecules that absorb the radiation to generate heat. The wavelength of the electromagnetic radiation is selected to be in resonance with the absorption lines of water or oxygen molecules in the cloud, or to be in resonance with absorption lines of known target molecules in the cloud to generate the heat. An increase in the cloud temperature increases the emission intensity of the molecules against the background, resulting in improved detection of the target molecules in the aerosol. A tracking telescope (16) collects the thermal emissions generated by the radiation beam. A spectrometer (18) receives the emissions from the cloud and generates an emission spectrum. In addition to this remote sensing setup a further embodiment is described wherein the aerosol is contained in a sample chamber.

## Description

### BACKGROUND OF THE INVENTION

### 1. Field of the Invention

This invention relates generally to a system for remotely detecting and analyzing chemical and biological aerosols and, more particularly, to a detection system that includes a laser source for radiating a target cloud with a laser beam to heat the cloud and increase its temperature relative to background, and a spectrometer for d etecting a nd analyzing chemical and biological aerosols in the cloud.

### 2. Discussion of the Related Art

It is known in the art to detect certain materials within a chemical cloud in the air by spectral analysis of the molecules making up the cloud. This type of chemical detection has many applications, including detecting natural gas leaks from underground pipes, chemical clouds from chemical spills, volatile organic vapor (VOC) from chemical processes, pollution from smoke stacks and the like, military chemical warfare agents, and other toxic materials present in the air. Typically, this type of spectral analysis of a chemical cloud is performed remotely, sometimes up to 10-20 km away, because the materials in the cloud may be toxic, and thus a threat to health, or it may not be possible to directly detect the chemical cloud. The distance the detecting instrument has to be from the cloud for this remote type of passive sensing depends on the particular application, and different systems exist for different applications.

To perform this type of detection and analysis, a spectrometer, such as a Fourier transform infrared (FTIR) spectrometer, is directed towards the cloud from a remote location, so that it passively receives emissions therefrom. If the chemical cloud is warmer than the background, such as sky, mountains, or other terrain, along the field-of-view of the spectrometer, target molecules in the cloud will exhibit emissions having energy greater than the background emissions from the sky. If the chemical cloud is the same temperature as the sky, the target molecules within the cloud are absorbing photons at the same rate that they are emitting photons, so that there is no net energy exchange between the cloud and the background, and thus, no difference relative to the background. As the temperature of the cloud increases, more photons are released from the materials in the cloud, which are available to be received by the spectrometer.

The spectral display generated by the spectrometer from the emissions provides emission lines and bands at certain wavelengths that are indicative of the atoms and molecules in the cloud. Because each material has its own spectral "fingerprint" representative of its molecules, the detected spectral display can be compared to a known "fingerprint" of a particular chemical to determine if that chemical exists in the cloud.

US Patent No. 6,531,701 issued March 11, 2003 to Chou et al., assigned to the assignee of this application and herein incorporated by reference, discloses a system for the remote detection and analysis of chemical vapors in the air. A beam of electromagnetic radiation from an electromagnetic radiation source radiates a suspected chemical cloud. The radiation energy that is absorbed by the cloud is quickly thermalized as a result of the rapid collision energy transfer between the molecules that absorb the radiation and the surrounding air molecules. This collisional energy redistribution will result in heating the materials in the cloud. An increase in the temperature of the cloud will increase the emission intensity of the molecules against the background, resulting in an improvement in the detection of the materials therein.

A tracking telescope collects thermal emissions from the chemical vapors generated by the radiation. A spectrometer, such as an FTIR spectrometer, is used to resolve the emissions from the cloud that are enhanced by the radiation and to generate an emissions spectrum. The emissions spectrum is used to identify suspect chemical vapors in the cloud by comparing the detected emissions to the known "fingerprint" vibrational spectrum of the suspect chemical vapors.

There is a need in the art for the rapid detection and analysis of toxic bio-aerosols and chemical aerosols for both personal health applications and homeland security applications. The detection and analysis should be capable of providing surveillance over a large area. For personal health applications, the aerosol can include toxic molds and pollens, which are inside or outside of a building, such as a residential home. For homeland security applications, the aerosol can include liquid aerosols of chemical agents, industrial toxic chemicals, and bio-aerosols of bacteria, viruses and toxins.

There is currently no suitable method known in the art that is quick and accurate for the detection and analysis of liquid chemical or biological aerosols. Bio-aerosols can be analyzed by bioassay techniques, known to those skilled in the art. However, current bioassay techniques are relatively slow, and would be ineffective for emergency situations. Bio-aerosols can also be detected by ultraviolet (UV) florescence techniques. However, the known UV florescence techniques have a relatively poor selectivity in identifying man made bio-aerosols from naturally occurring bio-aerosols.

U.S. Patent Application Serial No. 10/456,098, filed June 6, 2003, title "Detection and Analysis of Chemical and Biological Materials," assigned to the assignee of this application, discloses a system of detecting and analyzing bio-aerosols and chemical aerosols in a sample. The system disclosed in the '098 application employs a cooled or heated background relative to the target including the sample to provide a thermal contrast between the background and the target, thereby increasing the emissions or the absorption of the sample. However, the system disclosed in the '098 application has limitations because of the requirement of detection along a predetermined optical path, which is defined between a spectrometer and the cold or hot background. The system disclosed in the '098 application is also somewhat limited for wide-area surveillance.

### SUMMARY OF THE INVENTION

In accordance with the teachings of the present invention, a system for the remote detection and analysis of chemical and biological aerosols within a sample, such as a cloud, is disclosed. A beam of radiation from an electromagnetic radiation source, such as a laser, is used to radiate the sample cloud. The radiation energy that is absorbed by the cloud is quickly thermalized due to a rapid collision energy transfer between the molecules that absorb the radiation and the surrounding air molecules. This collisional energy redistribution results in heating the materials in the cloud. An increase in the temperature of the cloud will increase the emission intensity of the molecules against the background, resulting in an improvement in the detection of the materials in the cloud.

A tracking telescope collects thermal emissions from the target molecules generated by the radiation. A spectrometer, such as an FTIR spectrometer, receives and resolves the emissions from the cloud into an emissions spectrum. The emissions spectrum is used to identify suspect molecules in the cloud by comparing the detected emissions to the known "fingerprint" vibrational spectrum of the suspect molecules.

The electromagnetic radiation can be microwave, millimeter-wave (MMW), infrared, visible or ultraviolet radiation. The wavelength of the electromagnetic radiation can be selected to be in resonance with the absorption lines of the molecules in the suspected aerosol, or of water vapor or oxygen molecules that are commonly present in the cloud. If the wavelength of the electromagnetic radiation is in resonance with the absorption lines of the aerosol molecules, the emission intensity, as a function of the excitation wavelength, provides an increased discrimination of the aerosol molecules against background materials.

Additional advantages and features of the present invention will become apparent from the following description and appended claims taken in conjunction with the accompanying drawings.

### BRIEF DESCRIPTION OF THE DRAWINGS

Figure 1 is a plan view of a remote spectral detection and analysis system for detecting airborne chemical or biological aerosols, according to an embodiment of the present invention;

Figure 2 is a plan view of a detection and analysis system for detecting chemical or biological aerosols in a test chamber where the aerosol is heated by a laser beam, according to another embodiment of the present invention;

Figure 3 is a graph with wavelength on the horizontal axis and relative intensity on the vertical axis showing the net emission spectrum of a BG aerosol upon radiation with the CO₂ laser at 9.25 µm and about 10.59 µm;

Figure 4 is a graph with wavelength on the horizontal axis and relative intensity on the vertical axis showing the net emission spectrum of a Cab-O-Sil aerosol upon radiation with a CO₂ laser at 9.25 µm and about 10.59 µm;

Figure 5 is a graph with wavelength on the horizontal axis and emission intensity on the vertical axis showing the emission spectrum for background and Dimethyl Methyl Phosphonate (DMMP) upon irradiation with a CO₂ laser at 9.552 µm and 1.5 W; and

Figure 6 is a graph with wavelength on the horizontal axis and relative intensity on the vertical axis showing the net emission spectrum of a DMMP vapor at 0.84 Torr upon irradiation with a CO₂ laser at 9.552 µm and 1.5 W.

### DETAILED DESCRIPTION OF THE EMBODIMENTS

The following discussion of the embodiments of the invention directed to a system for the remote detection and analysis of chemical and biological aerosols is merely exemplary in nature, and is in no way intended to limit the invention or its applications or uses.

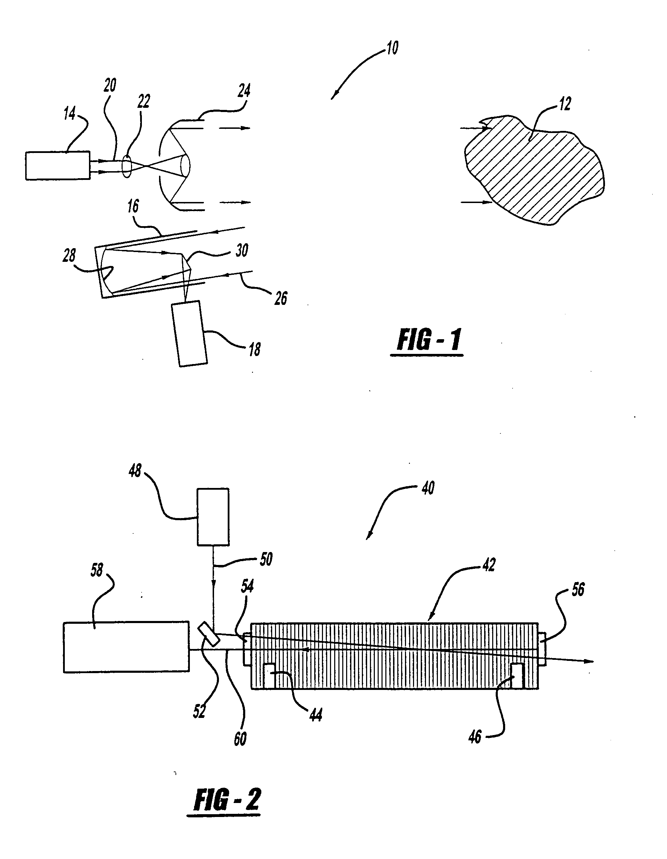

Figure 1 is a plan view of a detection and analysis system 10 that detects and analyzes chemical and/or biological aerosols within a target cloud 12 in the air, according to an embodiment of the present invention. The chemical or biological aerosol can be, for example, fine-liquid droplets of industrial chemicals, chemical agents, bacteria, viruses, pollens, biological agents and other chemical and biological materials. The system 10 includes a radiation source 14, a collection telescope 16 and a spectrometer 18. The radiation source 14 emits a radiation beam 20 that is focused by a lens 22 and then expanded and collimated by a beam-expanding telescope 24 to a desirable size. The radiation beam 20 is directed by the telescope 24 towards the cloud 12. Passive emissions 26 from the cloud 12 are collected by the telescope 16 and directed to the spectrometer 18.

The radiation source 12 can be any laser, millimeter-wave or microwave source suitable for the purposes discussed herein. In this embodiment, the radiation source 12 is a continuous wave (CW) CO₂ laser that is tuned to an absorption band of a target aerosol within the cloud 12. Other applicable lasers include HF lasers, DF lasers, solid-state lasers and fiber lasers. In this embodiment, the telescope 16 is a Newtonian type telescope, including a collecting mirror 28 for receiving the emissions 26 from the cloud 12 and a tuming mirror 30. However, the telescope 16 can be any suitable telescope for receiving and focusing radiation from a scene consistent with the discussion herein. The spectrometer 18 can be any type of spectral detecting device that provides a spectrum of the detected emissions in the frequency band of interest, such as the infrared frequency band. Suitable examples include Fourier transform infrared spectrometers, g rating tuned or dispersed spectrometers, acoustic-optic spectrometers, circularly variable filter spectrometers, linear variable spectrometers and MEMS spectrometers. Alternatively, an imaging spectrometer, such as a hyperspectral imager, can be used to obtain a spatially resolved spectrum.

The source 14, the telescope 16 and the spectrometer 18 can be mounted within a suitable housing, and can be included on a platform capable of scanning over a wide area for increased surveillance. Additionally, the system 10 can be made compact and portable to be readily moved from place to place.

The source 14 can be selected so that the wavelength of the radiation beam 20 is in resonance with a particular target molecule or molecules within the cloud 12 being detected. The wavelength of the radiation beam 20 can also be selected to be in resonance with the absorption lines of water vapor or oxygen molecules commonly present in air. The resonance causes the target molecules, water vapor or oxygen molecules to rotate or vibrate which causes their energy to increase. The radiation energy absorbed by the water vapor, the oxygen molecules or the target molecules in the cloud 12 is thermalized as a result of collision energy transfer causing inter-molecular relaxation. At atmospheric pressure, this thermalization is very rapid. This collisional energy redistribution results in heating the molecules in the cloud 12. An increase in the temperature of the cloud 12 will increase the emission intensity of the molecules in the cloud 12 against the background, resulting in an improved detection of the molecules.

If the wavelength of the electromagnetic radiation is selected to be in resonance with the absorption lines of the target molecules, the returned emission intensity, as a function of the excitation wavelength can be used to provide an additional way for discrimination against possible interference background chemicals. This is because the returned emission intensity from the target molecules should increase substantially as the excitation is tuned to the resonance absorption lines of the target molecules. In contrast, the emission intensity from background chemicals should not increase appreciably at these excitation wavelengths.

The telescope 16 collects the thermal emissions 26 returned from the cloud 12. The spectral content of the emissions 26 is then analyzed by the spectrometer 18. T he e mission s pectrum, t ypical in t he 8-14 micron region, is used to identify the molecules in the cloud 12 by comparing the detected emissions to the known "fingerprint" vibrational spectrum of predetermined molecules. The contrast from the spatially resolved spectrum can further be used to discriminate against any other interfering background chemicals that may be present.

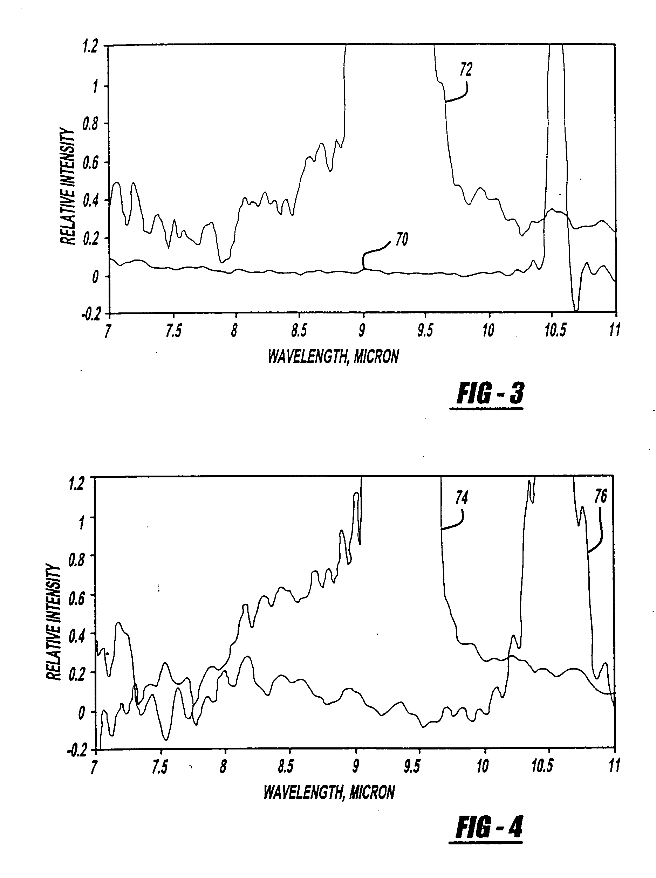

Figure 2 is a plan view of a detection and analysis system 40 that detects chemical or biological aerosols in a test chamber 42, according to another embodiment of the present invention. In one embodiment, the aerosol is BG spores or Cab-O-Sil, which have diameters of about 1.5 *µ*m and 3.8 *µ*m, respectively, as an example aerosol. Cab-O-Sil is a trade name for fine powders of silicon oxide, which is manufactured by a combustion process. A fine powder of BG spores, Cab-O-Sil or other sample material is initially placed inside the test chamber 42. Fans 44 and 46 blow the fine powder into an aerosol that circulates inside the chamber 42.

A CW CO₂ laser 48 generates a laser beam 50 that is directed by a folding mirror 52 through a transparent window 54 into the chamber 42. In this embodiment, the laser beam 50 is directed out of the chamber 42 through a transparent window 56 at an opposite end of the chamber 42. The windows 54 and 56 can be any transparent window suitable for the purposes discussed herein, such as polished salt windows, zinc selenide windows and other suitable windows having anti-reflective coatings. In one embodiment, the incident power of the laser beam 50 is about 1.5 W. An FTIR spectrometer 58 receives passive emissions 60 from within the chamber 42 through the window 54. The spectrometer 58 resolves the emission spectrum of the aerosol within the chamber 42 that is heated by the laser beam 50 against an ambient temperature background.

Figure 3 is a graph with wavelength on the horizontal axis and relative intensity on the vertical axis showing net emission spectrums of a BG aerosol above the background, as the aerosol is irradiated by a laser beam from a CO₂ laser at about 1.5 W laser power. When the laser 48 is tuned to an off-resonance BG absorption band near 10.59 µm, graph line 70, there is nearly no net enhanced emission by the laser radiation, except the scattered laser light, which may be caused by scattering from the windows 54 and 56. When the laser 48 is tuned to the peak of the BG absorption band near 9.25 µm, graph line 72, there is much stronger net emission intensity by the laser irradiation, in addition to the scattered laser light. The net emission spectrum, excluding the spectrum from the scattered laser light, is consistent with that expected from BG aerosols.

Figure 4 is a graph with wavelength on the horizontal axis and relative intensity on the vertical axis showing net emission spectrums of a Cab-O-Sil aerosol upon irradiation with a CO₂ laser at 9.25 µm, graph line 74, and irradiation with a CO₂ laser at about 10.59 µm, graph line 76, at about 1.5 W laser power. When the laser 48 is tuned to an off-resonance absorption band of Cab-O-Sil near 10.59 µm, the net emission intensity is quite low, except for the presence of some scattered laser light. When the laser 48 is tuned to the peak of the Cab-O-Sil absorption band near 9.25 µm at 1.5 W laser power, the net emission intensity becomes much stronger.

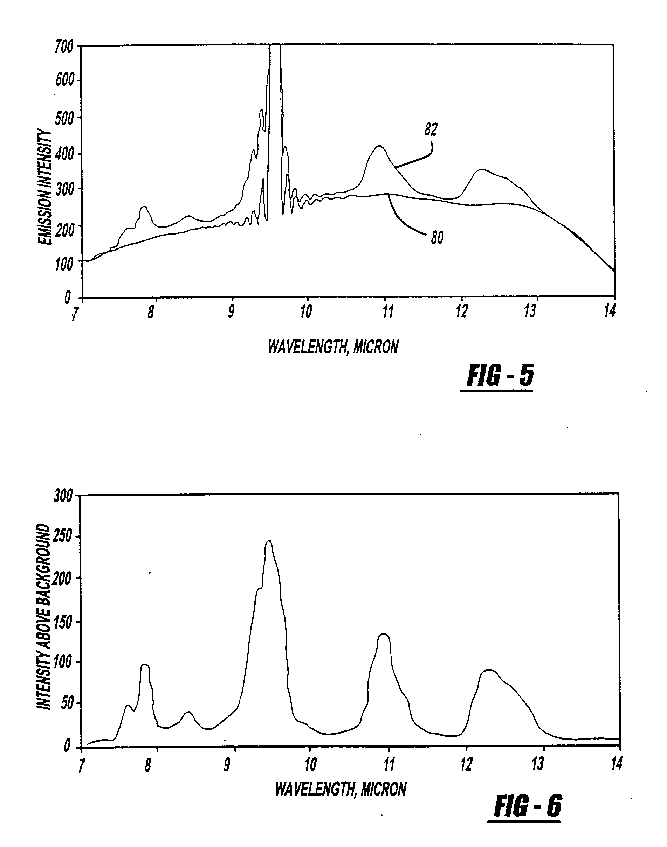

Figure 5 is a graph with wavelength on the horizontal axis and emission intensity on the vertical axis showing the emissions spectrum of the background when the chamber 42 is empty, graph line 80, and the emission spectrum of Dimethyl Methyl Phosphonate (DMMP) at a pressure of 0.84 Torr within the chamber 42, graph line 82, upon irradiation with a CO₂ laser at 9.552 µm, the peak of the DMMP absorption band, and about 1.5 W laser power.

Figure 6 is a graph with wavelength on the horizontal axis and relative intensity on the vertical axis showing the net emission spectrum of a DMMP vapor at a pressure of 0.84 Torr within the chamber 42 upon irradiation by a CO₂ laser at 9.552 µm and 1.5 W.

The foregoing discussion discloses and describes merely exemplary embodiments of the present invention. One skilled in the art will readily recognize from such discussion, and from the accompanying drawings and claims, that various changes, modifications and variations can be made therein without departing from the spirit and scope of the invention as defined in the following claims.

## Claims

1. A system for detecting and analyzing chemical and/or biological aerosols in a sample cloud in the air, said system comprising:
a radiation source, said radiation source directing a radiation beam towards the cloud, said radiation beam heating the cloud to raise the temperature of the cloud relative to its background; and
a s pectrum analysis device responsive to emissions from the cloud, said spectrum analysis device generating an emission spectrum of the chemical and/or biological aerosols in the cloud from the emissions.

2. The system according to claim 1 wherein the spectrum analysis device is a spectrometer.

3. The system according to claim 2 wherein the spectrometer is selected from the group consisting of Fourier transform infrared spectrometers, grating tuned spectrometers, opto-acoustic spectrometers, circularly variable filter spectrometers, linear variable spectrometers and MEMS spectrometers.

4. The system according to claim 1 wherein the spectrum analysis device is a spectral imager.

5. The system according to claim 1 wherein the radiation source is selected from the group consisting of a microwave radiation source, a millimeter-wave radiation source, a CO₂ laser, an HF laser, a DF laser, a solid-state laser and a fiber laser.

6. The system according to claim 1 further comprising a beam expander telescope, said beam expander telescope receiving and expanding the radiation beam before it radiates the sample cloud.

7. The system according to claim 1 further comprising a receiving telescope, said receiving telescope being responsive to the emissions from the cloud and focusing the emissions on the spectrum analysis device.

8. A system for detecting and analyzing chemical or biological aerosols, said system comprising:
a chamber for holding the aerosol, said chamber including a first end and a second end, said first end having a first window;
a radiation source, said radiation source generating and directing a radiation beam through the first window to heat the aerosol within the chamber; and
a spectrum analysis device positioned relative to the first end of the chamber, said spectrum analysis device being responsive to emissions from the sample emitted through the first window, said spectrum analysis device generating an emission spectrum of the aerosol.

9. The system according to claim 8 wherein the first window is a high transmission window selected from the group consisting of polished salt windows, zinc selenide windows and other suitable windows having anti-reflective coatings.

10. The system according to claim 8 wherein the sample chamber includes at least one fan for agitating a powder into the aerosol.

11. The system according to claim 8 wherein the spectrum analysis device is a spectrometer.

12. The system according to claim 11 wherein the spectrometer is selected from the group consisting of Fourier transform infrared spectrometers, grating tuned spectrometers, opto-acoustic spectrometers, circularly variable filter spectrometers, linear variable spectrometers and MEMS spectrometers.

13. The system according to claim 8 wherein the spectrum analysis device is a spectral imager.

14. The system according to claim 8 wherein the radiation source is selected from the group consisting of a microwave radiation source, a millimeter-wave radiation source, a CO₂ laser, an HF laser, a DF laser, a solid-state laser and a fiber laser.
